# EUROPEAN PATENT APPLICATION

(11) **EP 2 413 217 A2**
(43) Date of publication of application: **01.02.2012**
(21) Application number: 11173904.1
(22) Date of filing: 14.07.2011
(51) Int. Cl.: G06F 3/01, H04M 1/00

(54) **Apparatus and method for providing feedback on user input**

(30) Priority: 29.07.2010 KR 20100073422
(71) Applicant: SAMSUNG ELECTRONICS CO., LTD., Suwon-si, Gyeonggi-do (KR)
(72) Inventor: Lee, Hyung-yong, Gyeonggi-do (KR); Kim, Min-Sup, Gyeonggi-do (KR)
(74) Representative: Bruce, Alexander Richard Henry

(57) **Abstract**

An apparatus for providing feedback on a user input and a method of providing the same are provided. The apparatus includes: a user input receiver which receives a user input; a signal generator which generates a composite signal including at least one of a sound signal and a vibration signal; a thin film speaker which is attached under the user input receiver and generates a feedback signal on the user input according to the composite signal generated by the signal generator; and a controller which controls the signal generator to compose the sound signal and the vibration signal.

## Description

The present invention relates to an apparatus and method for providing feedback on user input, and more particularly, to an apparatus and method for providing feedback on user input using vibration signals.

In an apparatus where user input is possible through a touch screen, there is no physical feedback from the apparatus like that which occurs when a user presses a switch or a button. Therefore, since it is difficult for users to determine whether or not the input has been made precisely, using touch screens is inconvenient.

Thus, in order to resolve these problems, touch screen feedback apparatuses have been developed to provide appropriate feedback on a user input through sound or vibration.

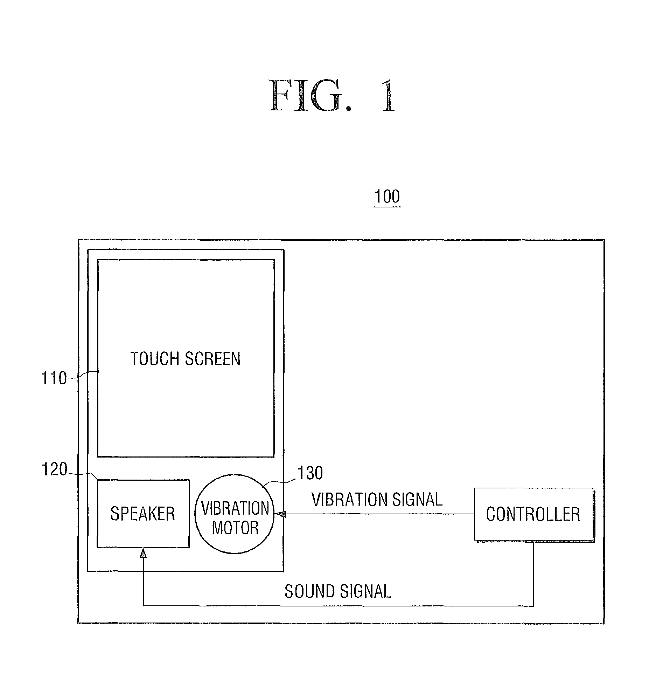

As illustrated in FIG. 1, when a user input is received through a touch screen 110, an aforementioned related art touch screen feedback apparatus 100 provides feedback on the user input through sound or vibration using a speaker 120 and a vibration motor 130. Herein, the speaker 120 is, for example, an Audio User Interface (AUI), used for playing sound signals, and the vibration motor 130 is used for vibrating the apparatus including the touch screen to provide vibration feedback to the user.

However, in related art technologies, such speakers and vibration motors are used separately to provide feedback on user input through sound and vibration, which increases costs. Furthermore, in the case of small apparatuses, each component occupies too much space, leaving less space for other components.

One or more exemplary embodiments provide an apparatus and method for providing feedback on a user input capable of providing sound and vibration feedback at the same time.

According to an aspect of an exemplary embodiment, there is provided an apparatus for providing feedback on a user input including: a user input receiver which receives a user input; a signal generator which generates a composite signal comprising at least one of a sound signal and a vibration signal; a thin film speaker which generates a feedback signal on the user input according to the composite signal generated by the signal generator; and a controller which controls the signal generator to compose the sound signal and the vibration signal according to the user input.

The user input receiver may be a touch screen or a touch pad.

The thin film speaker may be attached to the user input receiver under the user input receiver.

The composite signal may include at least one of a high-frequency signal corresponding to the sound signal and a low-frequency signal corresponding to the vibration signal.

According to an exemplary embodiment, the thin film speaker may vibrate the user input receiver to play sound using the sound signal, and vibrate the user input receiver to provide a vibration feedback signal on the user input using the vibration signal.

According to another exemplary embodiment, the thin film speaker may vibrate the user input receiver to provide at least one of the sound feedback signal and the vibration feedback signal on the user input, using the sound signal.

According to an exemplary embodiment, the controller may control the signal generator to modulate an amplitude and a frequency of the composite signal to adjust an intensity of the composite signal.

According to an exemplary embodiment, the controller may control the signal generator so that the thin film speaker generates a feedback signal corresponding to at least one of the sound signal and the vibration signal.

According to an aspect of another exemplary embodiment, there is provided a method of providing feedback on a user input, the method including: receiving a user input; controlling to generate a composite signal comprising at least one of a sound signal and a vibration signal according to the user input; and generating a feedback signal on the user input according to the composite signal.

The receiving the user input may include receiving the user input from a touch screen or a touch pad.

The generating the feedback signal may include generating the feedback signal through a thin film speaker, and the thin film speaker may be attached under a touch screen or a touch pad.

The composite signal may include at least one of a high-frequency signal corresponding to the sound signal and a low-frequency signal corresponding to the vibration signal.

According to an exemplary embodiment, the generating the feedback signal may include vibrating the touch screen or the touch pad to play sound using the sound signal, and vibrating the touch screen or the touch pad to provide a vibration feedback signal on the user input using the vibration signal.

According to another exemplary embodiment, the generating the feedback signal may include vibrating the touch screen or the touch pad to provide at least one of the sound feedback signal and the vibration feedback signal on the user input using the sound signal.

According to an exemplary embodiment, the controlling to generate the composite signal may include modulating at least one of an amplitude and a frequency of the composite signal to adjust an intensity of the composite signal.

According to an exemplary embodiment, the generating the feedback signal may include generating a feedback signal corresponding to at least one of the sound signal and the vibration signal.

According to an aspect of another exemplary embodiment, there is provided a method of providing feedback on a user input, the method including: controlling to generate a composite signal including at least one of a sound signal and a vibration signal according to a received user input; and generating, by a thin film speaker, a feedback signal on the received user input according to the composite signal, wherein the thin film speaker is capable of outputting a sound feedback signal and a vibration feedback signal according to the generated composite signal.

According to various exemplary embodiments, sound and vibration feedback is provided at the same time and thus there is an effect of providing appropriate feedback to the user.

The above and/or other aspects will be more apparent by describing certain exemplary embodiments with reference to the accompanying drawings, in which:
FIG. 1 illustrates a related art apparatus for providing feedback on a user input;
FIG. 2 is a block diagram of an apparatus for providing feedback on a user input according to an exemplary embodiment;
FIG. 3 illustrates a process of generating a feedback signal using a composite signal in an apparatus for providing feedback on a user input according to an exemplary embodiment;
FIG. 4 is a flowchart of a method of providing feedback on a user input according to an exemplary embodiment.

Certain exemplary embodiments will now be described in greater detail with reference to the accompanying drawings. It is understood that expressions such as "at least one of," when preceding a list of elements, modify the entire list of elements and do not modify the individual elements of the list.

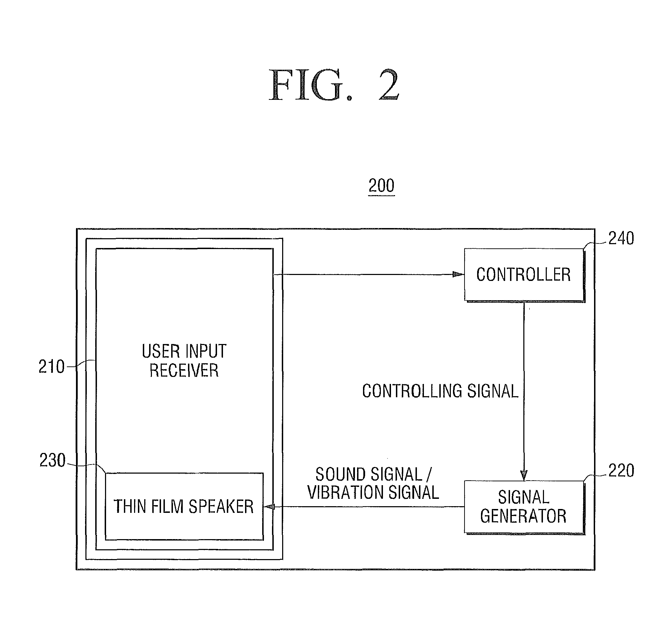

FIG. 2 is a block diagram of an apparatus 200 for providing feedback on a user input according to an exemplary embodiment. As illustrated in FIG. 1, the apparatus 200 includes a user input receiver 210, a signal generator 220, a thin film speaker 230, and a controller 240.

An apparatus 200 for providing feedback on a user input according to an exemplary embodiment may be used to provide feedback signals on a user input in portable devices such as cellular phones, laptops, PMPs, PDAs, smart phones, navigation devices, etc.

The user input receiver 210 receives a user input to execute functions of the portable apparatus.

Herein, the user input receiver 210 may be a touch screen or a touch pad. Hereinafter, it will be assumed that the user input receiver 210 is a touch screen, for convenience sake, though it is understood that another exemplary embodiment is not limited thereto.

The signal generator 220 generates a composite signal including at least one of a sound signal and a vibration signal.

For example, the composite signal may include at least one of a high-frequency signal corresponding to the sound signal and a low-frequency signal corresponding to the vibration signal.

The thin film speaker 230 is attached to the user input receiver 210, and generates a feedback signal on a user input according to the composite signal generated by the signal generator 220.

In other words, in order to provide the feedback signal on the user input, the apparatus 200 for providing feedback on a user input according to an exemplary embodiment makes the sound signal of the composite signal vibrate the touch screen to play sound or to generate a sound feedback signal, and makes the vibration signal of the composite signal vibrate the touch screen to generate a vibration feedback signal, using the thin film speaker 230.

The thin film speaker 230 may be attached under the touch screen, which is the user input receiver 210.

Furthermore, the thin film speaker 230 may be a thin film speaker that uses an actuator method, converting electric signals into mechanical vibration to generate a vibration reaction.

According to an exemplary embodiment, the thin film speaker 230 may vibrate the user input receiver 210 to play sound, using the sound signal, and may vibrate the user input receiver 210 to provide a vibration feedback signal on the user input, using the vibration signal.

For example, the thin film speaker 230 vibrates the touch screen, which is the user input receiver 210, to play sound of a multimedia file through the portable apparatus, using the sound signal which may have an audible frequency range of, for example, 20Hz ∼ 20KHz. In addition, the thin film speaker 230 vibrates the touch screen, which is the user input receiver 210, to generate the vibration feedback signal, using the vibration signal which may include a portion of the frequency range audible to humans, but may have a frequency range lower than that of the sound signal.

According to another exemplary embodiment, the thin film speaker 230 may vibrate the touch screen, which is the user input receiver 210, to provide at least one of the sound feedback signal and the vibration feedback signal on the user input, using the sound signal.

For example, the thin film speaker 230 may vibrate the touch screen, which is the user input receiver, to generate only the sound feedback signal on the user input from among the sound feedback signal and the vibration feedback signal, or only the vibration feedback signal on the user input from among the sound feedback signal and the vibration feedback signal, or both the sound feedback signal and the vibration feedback signal on the user input at the same time, using only the sound signal from among the sound signal and the vibration signal of the composite signal.

The controller 230 controls the signal generator 220 to generate at least one of the sound signal and the vibration signal according to the user input of the user input receiver 210.

In other words, when the controller 240 receives the user input from the touch screen, which is the user input receiver 210, the controller 240 controls the signal generator 220 to generate the composite signal which includes at least one of the sound signal for playing sound or the sound feedback signal and the vibration signal for the vibration feedback signal, in order to provide the feedback signal on the user input.

According to an exemplary embodiment, the controller 240 may control the signal generator 220 to modulate the amplitude and frequency of the composite signal to adjust the intensity of the composite signal.

In other words, the controller 240 controls the signal generator 220 to modulate the amplitude and frequency of the composite signal which includes at least one of the sound signal and the vibration signal, in order to adjust the intensity of the composite signal.

According to an exemplary embodiment, the controller 240 may control the signal generator 220 so that the thin film speaker 230 may generate the feedback signal which corresponds to at least one of the sound signal and the vibration signal. That is, the controller 240 controls the signal generator 220 so that the thin film speaker 230 may vibrate the touch screen to play sound or generate the sound feedback signal by the sound signal and generate the vibration feedback signal by the vibration signal, either separately or at the same time.

Therefore, the apparatus 200 for providing feedback on a user input according to an exemplary embodiment does not provide a speaker and a vibration motor separately in order to provide sound and touch feedback for providing feedback on a user input. Rather, the apparatus 200 uses a thin film speaker 230 to vibrate the touch screen so as to play sound or generate sound feedback and generate vibration feedback at the same time. Accordingly, the apparatus 200 may provide feedback on a user input effectively, increase space efficiency of the apparatus 200, and reduce the manufacturing cost of the apparatus 200.

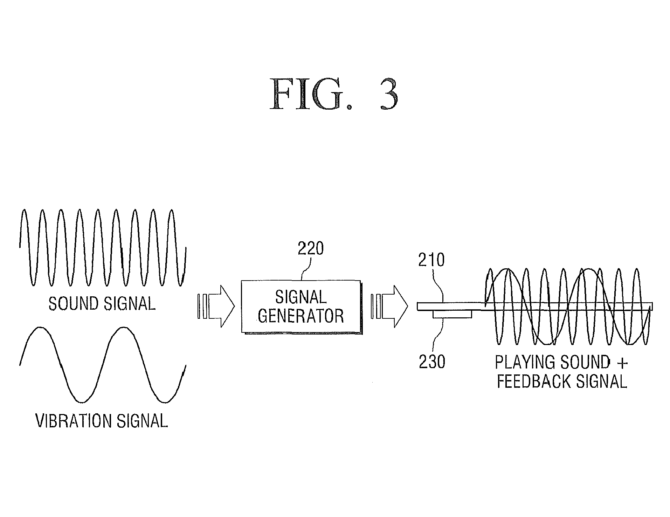

FIG. 3 illustrates a process of generating a feedback signal using a composite signal in an apparatus for providing feedback on a user input according to an exemplary embodiment.

For example, when a user input occurs, a controller of the apparatus for providing feedback on a user input according to an exemplary embodiment determines the user input, and generates a control signal for generating a high-frequency sound signal for playing sound and a low-frequency vibration signal for providing a vibration feedback signal, to a signal generator 220. As illustrated in FIG. 3, the signal generator 220 generates a composite signal which includes the high-frequency signal for playing sound and the low-frequency signal for providing the vibration feedback signal, and transmits the composite signal to the thin film speaker 230. Furthermore, the thin film speaker 230 may play sound and generate the vibration feedback signal according to the composite signal.

Though in FIG. 3 the high-frequency signal has been described to be used for playing sound, it is understood that another exemplary embodiment is not limited to that configuration. That is, according to another exemplary embodiment, the high-frequency signal may be used to provide the vibration feedback signal as well.

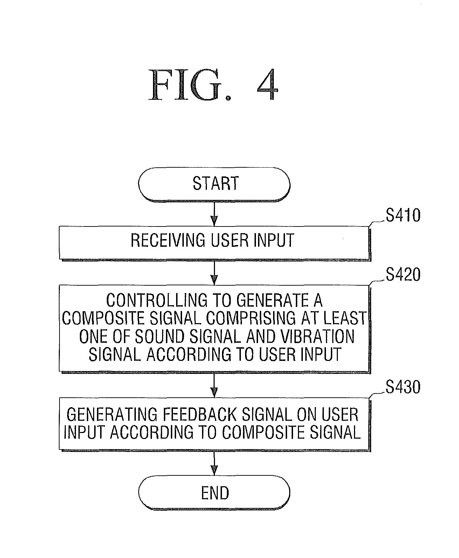

FIG. 4 is a flowchart illustrating a method of providing feedback on a user input according to an exemplary embodiment.

Referring to FIG. 4, a user input is received (operation S410).

According to an exemplary embodiment, the operation of receiving the user input (operation S410) may receive the user input from a touch screen or a touch pad.

A composite signal including at least one of a sound signal and a vibration signal is generated according to the user input (operation S420).

Herein, the composite signal may include at least one of a high-frequency signal corresponding to a sound signal and a low-frequency signal corresponding to a vibration signal.

According to an exemplary embodiment, the operation of controlling to generate a composite signal (operation S420) may modulate at least one of the amplitude and the frequency of the composite signal to adjust the intensity of the composite signal.

That is, the method of providing feedback on a user input according to an exemplary embodiment may modulate at least one of the amplitude and the frequency of the composite signal including at least one of the sound signal and the vibration signal, in order to adjust the intensity of the composite signal.

A feedback signal on the user input is generated according to the composite signal (operation S430).

Herein, the operation of generating the feedback signal (operation S430) may generate the feedback signal through a thin film speaker. In addition, the thin film speaker may be attached under the touch screen or the touch pad.

That is, in order to provide a feedback signal on a user input, the method for providing feedback on a user input according to an exemplary embodiment makes the sound signal of the composite signal vibrate the touch screen to play sound or to generate the sound feedback signal, and makes the vibration signal of the composite signal to vibrate the touch screen to generate the vibration feedback signal, using the thin film speaker.

According to an exemplary embodiment, the operation of generating a feedback signal (operation S430) may vibrate the touch screen or the touch pad to play sound using the sound signal, and may vibrate the touch screen or the touch pad to provide the vibration feedback signal on the user input using the vibration signal.

For example, the method of providing feedback on a user input according to an exemplary embodiment may vibrate the touch screen to play sound of a multimedia file through a portable apparatus using the sound signal. Furthermore, the method may also vibrate the touch screen to generate the vibration feedback signal using the vibration signal.

According to another exemplary embodiment, the operation of generating a feedback signal (operation S430) may vibrate the touch screen or the touch pad to provide at least one of the sound feedback signal and the vibration feedback signal on the user input, using the sound signal.

That is, the method of providing feedback on a user input according to an exemplary embodiment may vibrate the touch screen to generate only the sound feedback signal on the user input, or generate only the vibration feedback signal on the user input, or generate both the sound feedback signal and the vibration feedback signal on the user input at the same time, using only the sound signal of the composite signal.

According to an exemplary embodiment, the operation of generating a feedback signal (operation S430) may generate a feedback signal corresponding to at least one of the sound signal and the vibration signal.

That is, the method for providing feedback on a user input according to an exemplary embodiment may vibrate the touch screen to play sound or generate the sound feedback signal by the sound signal, and to generate the vibration feedback signal by the vibration signal, either separately or at the same time.

Therefore, the method for providing feedback on a user input according to an exemplary embodiment does not use both a speaker and a vibration motor in order to provide sound and vibration feedback on a user input as in the related art, but rather, uses a thin film speaker to vibrate the touch screen, playing the sound or providing sound feedback and vibration feedback at the same time.

Meanwhile, the aforementioned method for providing feedback on a user input may be embodied in a program command format which can be performed through various computer devices and recorded in computer-readable recording media. Herein, the recording media may include a program command, data file, and a data structure, separately or in combinations. Meanwhile, the program command recorded in the recording media may be specially designed and structured or well known to those skilled in computer software field and thus usable.

The computer-readable recording media includes magnetic media such as a hard disc, floppy disk and magnetic tape; optical media such as a CD-ROM, and DVD; magneto-optical media such as a floptical disk; and hardware apparatuses specially structured to store and perform program commands such as a ROM, RAM, and flash memory. Meanwhile, such recording media may be transmitting media such as optical or metallic lines and wave guides including carrier waves which transmit signals designating program commands and data structures.

In addition, program commands include not only machine language codes made by compilers but also high class language codes which can be executed by computers using interpreters. The aforementioned hardware apparatus may be configured to be operated as more than one software module in order to perform operations of an exemplary embodiment, and visa versa.

Although a few exemplary embodiments have been shown and described, it would be appreciated by those skilled in the art that changes may be made in the exemplary embodiments without departing from the principles of the inventive concept, the scope of which is defined in the claims.

## Claims

1. An apparatus for providing feedback on a user input, the apparatus comprising:
a user input receiver which receives a user input;
a signal generator which generates a composite signal comprising at least one of a sound signal and a vibration signal;
a thin film speaker which generates a feedback signal on the received user input according to the composite signal generated by the signal generator; and
a controller which controls the signal generator to compose the sound signal and the vibration signal according to the received user input.

2. The apparatus according to claim 1, wherein the user input receiver is a touch screen or a touch pad.

3. The apparatus according to claim 1 or 2, wherein the thin film speaker is attached to the user input receiver under the user input receiver.

4. The apparatus according to anyone of claims 1 to 3, wherein the composite signal comprises at least one of a high-frequency signal corresponding to the sound signal and a low-frequency signal corresponding to the vibration signal.

5. The apparatus according to anyone of claims 1 to 4, wherein the thin film speaker vibrates the user input receiver to play sound using the sound signal, and vibrates the user input receiver to provide a vibration feedback signal on the received user input using the vibration signal.

6. The apparatus according to anyone of claims 1 to 5, wherein the thin film speaker vibrates the user input receiver to provide at least one of a sound feedback signal and a vibration feedback signal on the received user input, using the sound signal.

7. A method of providing feedback on a user input, the method comprising:
receiving a user input;
controlling generation of a composite signal comprising at least one of a sound signal and a vibration signal according to the received user input; and
generating a feedback signal on the received user input according to the composite signal.

8. The method according to claim 7, wherein the receiving the user input comprises receiving the user input from a touch screen or a touch pad.

9. The method according to claim 7 or 8, wherein the generating the feedback signal comprises generating the feedback signal through a thin film speaker.

10. The method according to claim 9, wherein the thin film speaker is attached under a touch screen or a touch pad.

11. The method according to anyone of claims 7 to 10, wherein the composite signal comprises at least one of a high-frequency signal corresponding to the sound signal and a low-frequency signal corresponding to the vibration signal.

12. The method according to anyone of claims 7 to 11, wherein the generating the feedback signal comprises vibrating a touch screen or a touch pad to play sound using the sound signal, and vibrating the touch screen or the touch pad to provide a vibration feedback signal on the received user input using the vibration signal.

13. The method according to anyone of claims 7 to 12, wherein the generating the feedback signal comprises vibrating a touch screen or a touch pad to provide at least one of a sound feedback signal and a vibration feedback signal on the received user input using the sound signal.

14. The method according to anyone of claims 7 to 13, wherein the controlling generation of the composite signal comprises modulating at least one of an amplitude and a frequency of the composite signal to adjust an intensity of the composite signal.

15. The method according to anyone of claims 7 to 14, wherein the generating the feedback signal comprises generating the feedback signal corresponding to at least one of the sound signal and the vibration signal.
